# FASCICULE DE BREVET EUROPEEN

(11) **EP 3 670 989 B1**
(45) Date de publication et mention de la délivrance du brevet: **14.07.2021**
(21) Numéro de dépôt: 19216418.4
(22) Date de dépôt: 16.12.2019
(51) Int. Cl.: F16L 21/06, F16L 33/04, F16L 23/08

(54) **DISPOSITIF DE SERRAGE COMPRENANT UNE CEINTURE ET DEUX OREILLES DE SERRAGE RAPPORTEES**
SPANNVORRICHTUNG, DIE EINEN RIEMEN UND ZWEI VERSETZTE SPANNKLEMMEN UMFASST
CLAMPING DEVICE COMPRISING A BELT AND TWO FITTED TIGHTENING LUGS

(30) Priorité: 17.12.2018 FR 1873093
(43) Date de publication de la demande: 24.06.2020
(73) Titulaire: Caillau, 92130 Issy-les-Moulineaux (FR)
(72) Inventeur: RIGOLLET, Nicolas, 41200 ROMORANTIN-LANTHENAY (FR); CLERC, Dylan, 41200 ROMORANTIN-LANTHENAY (FR)
(74) Mandataire: Cabinet Beau de Loménie

(56) Documents cités:
- EP-A1- 2 594 835
- EP-A1- 2 789 888
- FR-E- 84 691
- KR-U- 20080 003 496

## Description

### Domaine Technique

Le présent exposé se rapporte à un dispositif de serrage du type collier de serrage, comprenant une ceinture ayant une première et une deuxième extrémité, et une première et une deuxième oreille de serrage portées par la ceinture, qui sont respectivement formées dans une première et une deuxième portion de bande respectivement fixées à la face externe de la ceinture au voisinage de sa première et sa deuxième extrémité.

### Technique antérieure

Des dispositifs de serrage de ce type sont connus, par exemple par la demande de brevet US 2003/0015872 ou EP 2789888A1. Classiquement, les portions de bande dans lesquelles sont formées les oreilles présentent une courbure adaptée à celle de la ceinture et sont plaquées contre la face externe de cette ceinture pour être fixées à cette dernière en plusieurs points de fixation, par exemple par soudure.

Ces dispositifs connus présentent plusieurs inconvénients. D'une part, il faut disposer, pour chaque diamètre de ceinture, de portions de bande adaptées à ce diamètre, c'est-à-dire présentant des courbures correspondant à celles de la ceinture. Ceci complique la fabrication et l'approvisionnement pour pouvoir proposer une gamme de dispositifs de diamètres différents. De plus, lorsque la ceinture est serrée sur un objet, le diamètre de cette ceinture est diminué, de sorte que sa courbure doit pouvoir augmenter (c'est-à-dire que son rayon de courbure diminue) de manière homogène pour bien serrer l'objet sur tout son pourtour. Cependant, les première et deuxième portions de bande plaquées sur la ceinture peuvent contrarier cette homogénéité en rigidifiant localement la ceinture.

### Exposé de l'invention

L'exposé vise à remédier au moins substantiellement aux inconvénients précités.

Ainsi, l'exposé se rapporte à un dispositif de serrage comprenant une ceinture ayant une première et une deuxième extrémité, et une première et une deuxième oreille de serrage portées par la ceinture qui sont respectivement formées dans une première et une deuxième portion de bande respectivement fixées à la face externe de la ceinture au voisinage de sa première et de sa deuxième extrémité, au moins la première portion de bande étant fixée à la ceinture par au moins une première zone de fixation formée sur un bossage de la première portion de bande en saillie vers l'intérieur et/ou un bossage de la ceinture en saillie vers l'extérieur et par une deuxième zone de fixation, dans lequel, de part et d'autre du bossage sur lequel est formée la première zone de fixation, un espace de dégagement est ménagé entre la face interne de la première portion de bande et la face externe de la ceinture.

Ainsi, avec le dispositif selon l'exposé, le bossage sur lequel est formée la zone de fixation peut former une sorte de point de basculement entre la portion de bande concernée et la ceinture. En d'autres termes, lorsque l'on souhaite fixer la portion de bande sur la ceinture, on dispose le bossage à l'endroit convenable sur la face externe de la ceinture, et on opère une fixation dans cette première zone de fixation. Il n'est donc pas nécessaire d'avoir un contact continu entre la face interne de la portion de bande et la face externe de la ceinture. En particulier, l'espace de dégagement ménagé entre la face interne de la première portion de bande et la face externe de la ceinture permet de légers débattements entre la première portion de bande et la ceinture, ce qui permet d'utiliser une même première portion de bande pour des ceintures de diamètres différents.

Pour réaliser la deuxième zone de fixation, il suffit de faire basculer la portion de bande par rapport à la ceinture tout en gardant le contact entre le bossage et la face externe de la ceinture jusqu'à ce qu'une autre zone de la portion de bande vienne au contact de la ceinture, de manière à opérer une deuxième fixation dans cette deuxième zone de contact.

On comprend que l'on peut ainsi utiliser une même gamme de portions de bande à oreilles, pour des ceintures de diamètres différents. De plus, dans la mesure où la première zone de fixation est effectuée sur le bossage, les déformations de la portion de bande et de la ceinture peuvent être dans une certaine mesure être décorrélées lors du serrage de sorte que la fixation de la portion de bande ne nuit pas à la réduction homogène du diamètre de la ceinture.

Optionnellement, la première zone de fixation est formée par soudure.

Optionnellement, la première et la deuxième zone de fixation sont alignées dans la direction circonférentielle de la ceinture.

Optionnellement, la dimension de la deuxième zone de fixation, mesurée selon la surface de la ceinture, est analogue à celle de la première zone de fixation.

Optionnellement, la dimension de la première zone de fixation représente entre 15 mm² et 80 mm², de préférence entre 25 mm² et 60 mm².

Optionnellement, la première zone de fixation représente une surface sensiblement en forme de disque, ayant un diamètre compris entre 25% et 60% de la largeur de la ceinture.

Optionnellement, les première et deuxième zones de fixation sont alignées dans la direction circonférentielle de la ceinture.

Optionnellement, la deuxième zone de fixation est formée sur un bossage de la première portion de bande en saillie vers l'intérieur et / ou un bossage de la ceinture en saillie vers l'extérieur.

Optionnellement, le bossage de la deuxième zone de fixation est formé dans l'un des éléments comprenant la première portion de bande et la ceinture, et délimite un rebord de calage, et l'autre des éléments comprenant la première portion de bande et la ceinture présente une ouverture dans laquelle le bossage de la deuxième zone de fixation est reçu et calé.

Optionnellement, la deuxième zone de fixation est formée par clinchage.

Optionnellement, la deuxième zone de fixation est formée par soudure.

Optionnellement, parmi les première et deuxième zones de fixation, seule la première zone de fixation est formée par soudure, cette première zone de fixation se trouvant optionnellement en arrière de la deuxième zone de fixation.

Optionnellement, les première et deuxième portions de bande sont fixées à la ceinture de la même manière.

Optionnellement, exactement deux zones de fixation sont prévues pour chacune des première et deuxième portions de bande.

La première zone de fixation constitue une fixation plus ou moins ponctuelle, de dimensions réduites. Il en va de même, lorsqu'elle est présente, pour la deuxième zone de fixation. La deuxième zone de fixation peut également être formée sur un bossage de manière à augmenter encore la décorrélation entre les déformations de la portion de bande et celles de la ceinture. On peut choisir de réaliser la fixation dans les deux zones de fixation par soudure, ou bien, pour l'une et / ou l'autre des première et deuxième zone de fixation, de réaliser une fixation autre, par exemple par clinchage avec déformation de maintien, ou bien par calage.

Le présent exposé sera bien compris et ses avantages apparaîtront mieux à la lecture de la description détaillée qui suit, de modes de réalisations représentés à titre d'exemples sur les figures jointes.

### Brève description des dessins annexés

[Fig. 1] La figure 1 est une vue en perspective d'un dispositif de serrage selon le présent exposé, selon un premier mode de réalisation.
[Fig. 2] La figure 2 est une vue en coupe selon le plan II-II de la figure 1.
[Fig. 3] La figure 3 est une vue analogue à la figure 1, pour un autre mode de réalisation.
[Fig. 4] La figure 4 est une vue en coupe dans le plan IV-IV de la figure 3.
[Fig. 5] La figure 5 montre, dans une vue correspondant à celle de la figure 4, encore un autre mode de réalisation.
[Fig. 6] La figure 6 montre, dans une vue correspondant à celle de la figure 4, encore un autre mode de réalisation.
[Fig. 7] La figure 7 montre, dans une vue correspondant à celle de la figure 4, encore un autre mode de réalisation.
[Fig. 8] La figure 8 est une vue analogue à celle de la figure 4, montrant une variante.
[Fig. 9] La figure 9 est une vue analogue à celle de la figure 4, montrant une variante.
[Fig. 10] La figure 10 est une vue analogue à celle de la figure 4, montrant une variante.
[Fig. 11] La figure 11 est une vue analogue à celle de la figure 4, montrant une variante.

### Description des modes de réalisation

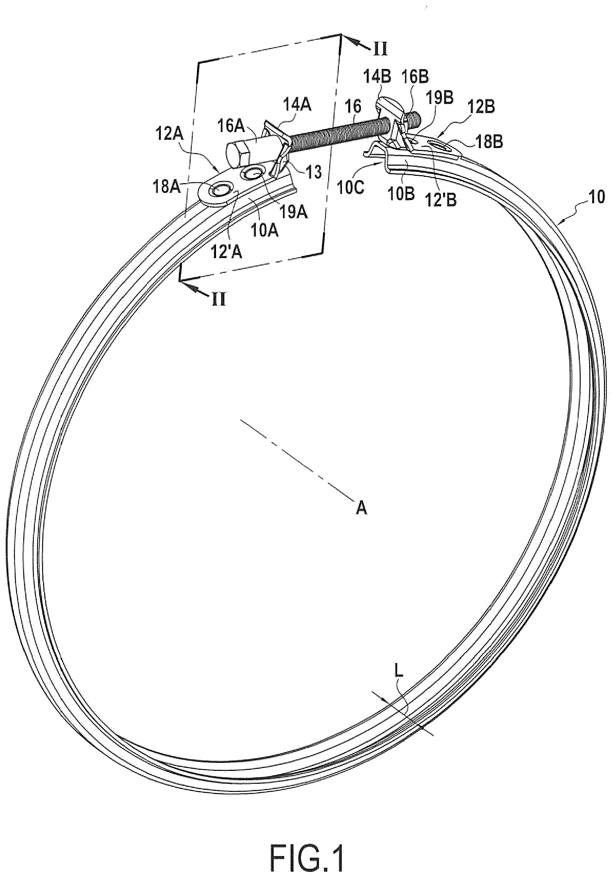

La figure 1 montre un dispositif de serrage comprenant une ceinture 10 ayant une première et une deuxième extrémité respectivement 10A et 10B. Cette ceinture est constituée par une bande de métal enroulée sur elle-même autour d'un axe A. En l'espèce, la ceinture est profilée dans la mesure où elle présente, dans une coupe parallèle à l'axe A, une section qui délimite un renfoncement interne 10C. Par exemple, la ceinture sert à la fixation de deux extrémités de tubes présentant chacun une surface d'appui, de sorte que, lorsque les tubes sont raccordés, ces surfaces sont reçues dans le renfoncement interne 10C précité. Par exemple, ce renfoncement peut avoir une forme en U ou en V.

Le dispositif comprend une première et une deuxième portions de bande respectivement 12A et 12B qui sont fixées à la face externe de la ceinture 10 respectivement au voisinage de sa première et de sa deuxième extrémité 10A et 10B.

Par convention, au sens du présent exposé, la face externe d'un élément est celle qui est la plus éloignée de l'axe A. Ainsi, le renfoncement 10C précité est formé sur la face interne de la ceinture. De plus, les directions vers l'avant et vers l'arrière s'entendent par rapport au sens du déplacement des extrémités du collier lors du serrage. Ainsi, lors du serrage, l'extrémité 10A du collier tend à se déplacer vers l'extrémité 10B, c'est-à-dire vers l'avant. En d'autres termes, s'agissant de l'extrémité 10A ou d'un élément porté par elle, la direction vers l'avant est celle qui est vers l'extrémité 10B. De même, s'agissant de l'extrémité 10B ou d'un élément porté par elle, la direction vers l'avant est celle qui est vers l'extrémité 10A.

Des oreilles de serrage respectives 14A et 14B sont formées dans les portions de bande 12A et 12B. Ces oreilles sont redressées sensiblement radialement pour pouvoir être manipulées pour être déplacées l'une par rapport à l'autre de manière à diminuer le diamètre de la ceinture 10, en serrant ainsi le dispositif sur un objet devant être serré, par exemple les extrémités de tubes raccordés.

En l'espèce, chaque oreille 14A, 14B est formée dans une seule pièce avec la portion de bande 12A, 12B qui la porte. Les oreilles peuvent être formées par un simple pliage, ou bien, comme dans l'exemple représenté, par des portions redressées et embouties, de telle sorte que chaque oreille présente des joues latérales 13 qui contribuent à assurer sa rigidité.

En l'espèce, les oreilles de serrage coopèrent avec une tige de serrage 16 qui peut être manipulée pour les déplacer l'une par rapport à l'autre de manière à réaliser le serrage. En l'espèce, cette tige est une vis, présentant une tête ou un écrou 16A retenu derrière l'une des oreilles 14A et 14B, et avec laquelle coopère un écrou 16B retenu derrière l'autre oreille. Les oreilles 14A et 14B présentent des perçages traversés par le fût de la vis 16.

Chacune des portions de bande 12A et 12B comprend une semelle 12'A, 12'B globalement parallèle à la ceinture 10 et fixée à cette dernière, ainsi qu'une portion redressée formée par l'oreille, respectivement 14A et 14B. Ici, « globalement parallèle » signifie s'étendant globalement dans la même direction que la ceinture, sans nécessairement présenter la même courbure que cette dernière. Les portions de bande 12A et 12B sont fixées à la face externe de la ceinture par leurs semelles respectives 12'A, 12'B.

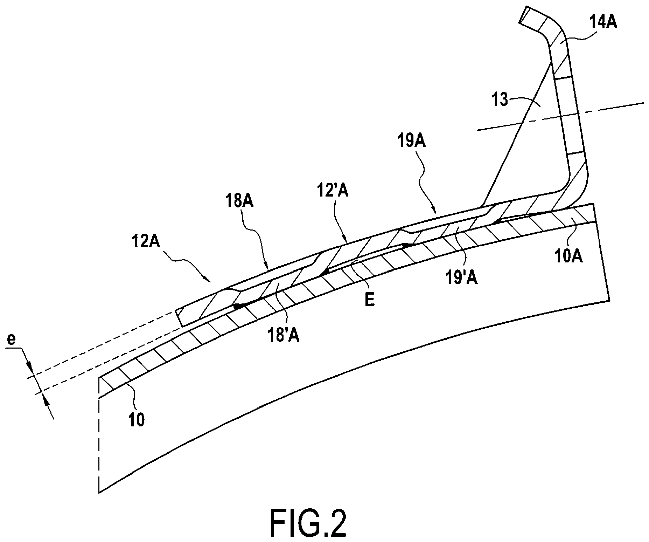

Sur la figure 2, on voit mieux la fixation de la portion de bande 12A à la ceinture 10. Cette fixation comprend une première zone de fixation 18A et une deuxième zone de fixation 19A disposées l'une à la suite de l'autre dans le sens de la circonférence de la ceinture 10. En l'espèce, ces zones de fixation 18A et 19A sont alignées dans la direction circonférentielle de la ceinture. On voit sur la figure 1 que, de même, la deuxième portion de bande 12B est fixée à la ceinture en une première et une deuxième zone de fixation, respectivement 18B, 19B.

En l'espèce, les fixations des première et deuxième portions de bande à la ceinture sont identiques. On voit que la première zone de fixation 18A est formée sur un bossage 18'A de la première portion de bande 12A qui est en saillie vers l'intérieur, c'est-à-dire, vers l'axe A. Dans la première zone de fixation 18A, c'est par les surfaces de contact entre le bossage 18'A et la face externe de la ceinture 10 que s'opère la fixation, et l'on voit que, de part et d'autre de ce bossage, la face interne de la portion de bande 12A est à légère distance de la face externe de la ceinture. L'espace de dégagement E ainsi ménagé permet de légers débattements entre la première portion de bande 12A et la ceinture 10, ce qui permet d'utiliser une même première portion de bande pour des ceintures de diamètres différents. Il en va de même pour la première zone de fixation 18B de la portion de bande 12B. Ainsi, les semelles 12'A et 12'B peuvent, tout en étant globalement parallèles à la ceinture, c'est-à-dire orientées comme elle, avoir une courbure différente de celle de la ceinture.

En l'espèce, la première zone de fixation 18A peut être formée par une fixation par soudure.

En l'espèce, la deuxième zone de fixation 19A est analogue à la première zone de fixation 18A. Ainsi, elle présente un bossage 19'A ménageant un espace entre les surfaces adjacentes de la ceinture et de la première portion de bande, et est réalisée par soudure. En l'espèce, les dimensions des premières zones de fixation 18A, 18B et des deuxièmes zones de fixation 19A, 19B sont analogues. Ceci signifie que les surfaces occupées par les soudures de ces zones de fixation sont les mêmes tout en pouvant légèrement varier les unes par rapport aux autres, par exemple selon une marge de variation de l'ordre de 30 % ou moins, voire 10% ou moins.

Dans le mode de réalisation qui vient d'être décrit, les première et deuxième zones de fixation sont formées par soudure, la deuxième zone étant ici formée sur un bossage, comme la première zone. On pourrait cependant, tout en conservant l'adaptabilité à différents diamètres, former la deuxième zone dans des zones non déformées de la portion de bande et de la ceinture (c'est-à-dire sur des zones dépourvues de bossages).

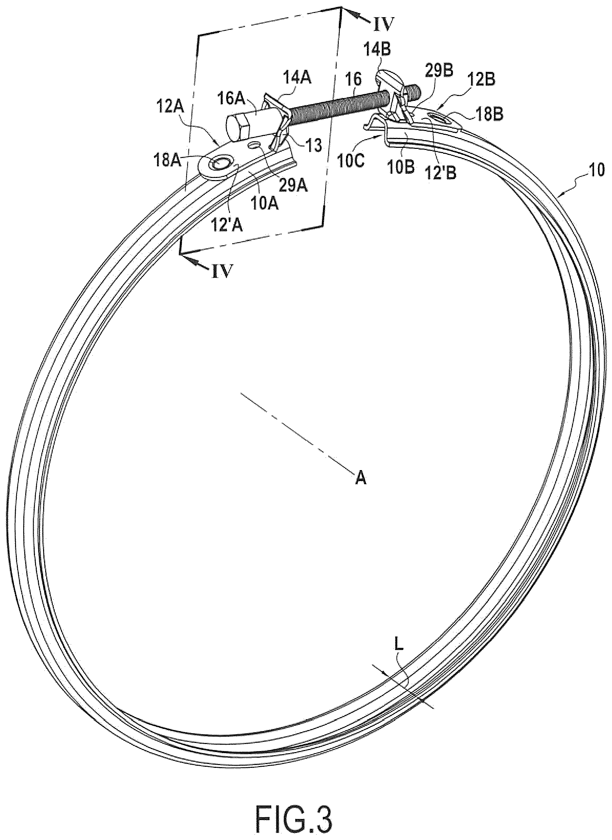

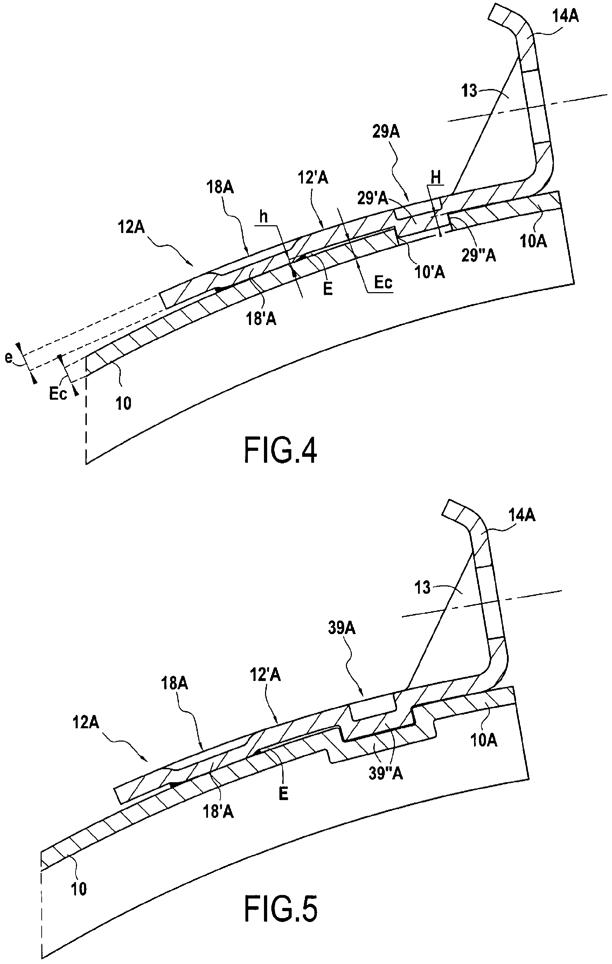

On décrit maintenant un deuxième mode de réalisation en référence aux figures 3 et 4. Sur ces figures, les éléments inchangés par rapport aux figures 1 et 2 sont désignés par les mêmes références.

Dans ce deuxième mode de réalisation, les premières zones de fixation 18A et 18B sont identiques à celles du premier mode de réalisation. En revanche, les deuxièmes zones de fixation 29A et 29B sont ici différentes. On décrit la deuxième zone de fixation 29A, la deuxième zone de fixation 29B lui étant identique. Cette deuxième zone de fixation 29A comprend un bossage 29'A qui présente la forme d'un plot délimitant un rebord de calage 29"A.En particulier, ce rebord de calage 29"A présente la forme d'une portion de surface cylindrique dont l'axe est orienté selon un rayon de la ceinture 10. La ceinture 10 présente quant à elle une ouverture 10'A dans laquelle le bossage 29'A est reçu. Cette ouverture a par exemple la forme d'un trou circulaire dont l'axe est le même que celui de la surface cylindrique formée par le rebord de calage 29"A. On comprend que le bord de cette ouverture forme également un bord de calage pour le rebord de calage 29"A, le diamètre de l'ouverture étant égal ou légèrement supérieur à celui du rebord de calage 29"A. La hauteur H du rebord de calage 29"A correspond tout au plus sensiblement à l'épaisseur Ec de la ceinture 10, c'est-à-dire à la hauteur du bord de l'ouverture 10'A. Par exemple, la hauteur H est de l'ordre de 50% à 80% de l'épaisseur Ec. Ainsi, le bossage 29'A est effectivement reçu dans cette ouverture sans faire saillie sur la face interne de la ceinture 10.

Bien entendu, le fait que le rebord de calage 29"A et le bord de l'ouverture 10'A forment des surfaces cylindriques à base circulaire n'est qu'un exemple de réalisation. Ce qui importe, c'est que ces surfaces soient adaptées l'une à l'autre et soient globalement orientées selon le même rayon de la ceinture.

Par exemple, pour fixer la portion de bande 12A à la ceinture 10, on insère d'abord le bossage 29'A dans l'ouverture 10'A en formant ainsi la deuxième zone de fixation 29A, et on soude le bossage 18'A à la face externe de la ceinture en formant ainsi la première zone de fixation 18A. On constate que, dans cette manœuvre, on peut faire basculer la semelle 12'A de la portion de bande 12A, pour l'adapter à la ceinture 10, sans que la courbure de cette semelle n'ait nécessairement été à l'origine adaptée à celle de la ceinture. Le bossage 29'A sert ainsi de repère pour correctement positionner la portion de bande 12A sur la ceinture et réaliser la première zone de fixation. A l'état libre, avant le serrage de la ceinture, il est possible que le bossage 29'A ait tendance à légèrement ressortir de l'ouverture 10'A. Cependant, au fur et mesure du serrage, la coopération entre le rebord de calage 29"A du bossage 29'A et le bord de calage de l'ouverture 10'A est mise en œuvre naturellement puisque, sous l'effet de l'effort de serrage, la semelle 12'A de la portion de bande 12A est plaquée contre la face externe de la ceinture.

On décrit maintenant la figure 5, qui montre un autre mode de réalisation. Sur cette figure, les mêmes références sont également conservées pour les éléments inchangés. Ce mode de réalisation se distingue également des précédents par la conformation de la deuxième zone de fixation 39A. En l'espèce, cette deuxième zone de fixation est réalisée par clinchage 39"A, ce qui signifie que, dans cette zone, la semelle 12'A de la portion de bande 12A et la ceinture 10 sont plaquées l'une contre l'autre et sont déformées ensemble par une embouti conjoint non traversant. En l'espèce, cette déformation est opérée vers l'intérieur de la ceinture. Dans la deuxième zone de fixation, les matériaux de la semelle 12'A et de la ceinture sont en coopération mécanique intime, de sorte que la portion de bande 12A est parfaitement calée par rapport à la ceinture. De même que dans le mode de réalisation précédent, pour fixer la portion de bande 12A à la ceinture, on peut réaliser d'abord la deuxième zone de fixation 39A, puis souder le bossage 18'A sur la face externe de la ceinture 10 pour réaliser la première zone de fixation 18A. Bien entendu, la deuxième portion de bande 12B peut être fixée de même manière que de la première portion de bande 12A.

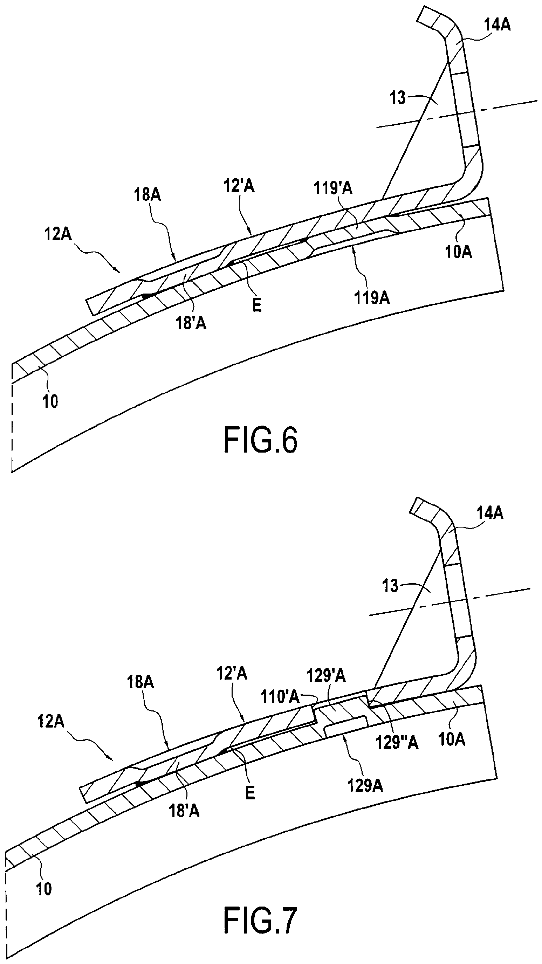

Comme indiqué, pour créer un espace entre la semelle de la portion de bande et la ceinture, le bossage 18'A dans lequel est formée la première zone de fixation est en saillie vers l'intérieur lorsqu'il est réalisé sur la portion de bande 12A. On peut réaliser ainsi la première zone de fixation, tout en réalisant la deuxième zone de fixation par une déformation vers l'extérieur à partir de la face interne de la ceinture. C'est ce que montre la figure 6, sur laquelle on reconnaît le bossage 18'A de la première zone de fixation 18A. En revanche, sur cette figure, la deuxième zone de fixation 119A qui est en l'espèce également formée par soudure, est réalisée sur un bossage 119'A de la ceinture qui fait saillie vers l'extérieur. Ainsi, ce bossage coopère avec la face interne de la semelle 12'A de la portion de bande 12A dans une zone de contact dans laquelle cette semelle peut être plate.

De même, la figure 7 montre une variante du mode de réalisation de la figure 4, dans laquelle la première zone de fixation 18A est toujours inchangée, mais la deuxième zone de fixation 129A comprend un bossage 129'A formé dans la ceinture 10 et en saillie vers l'extérieur. De son côté, la semelle 12'A de la portion de bande 12A présente une ouverture 110'A qui délimite un bord de calage pour le rebord de calage 129"A formé par la surface latérale du bossage 129'A. Ce bossage peut avoir la forme d'un plot et le rebord de calage peut être une surface sensiblement parallèle à un rayon de la ceinture.

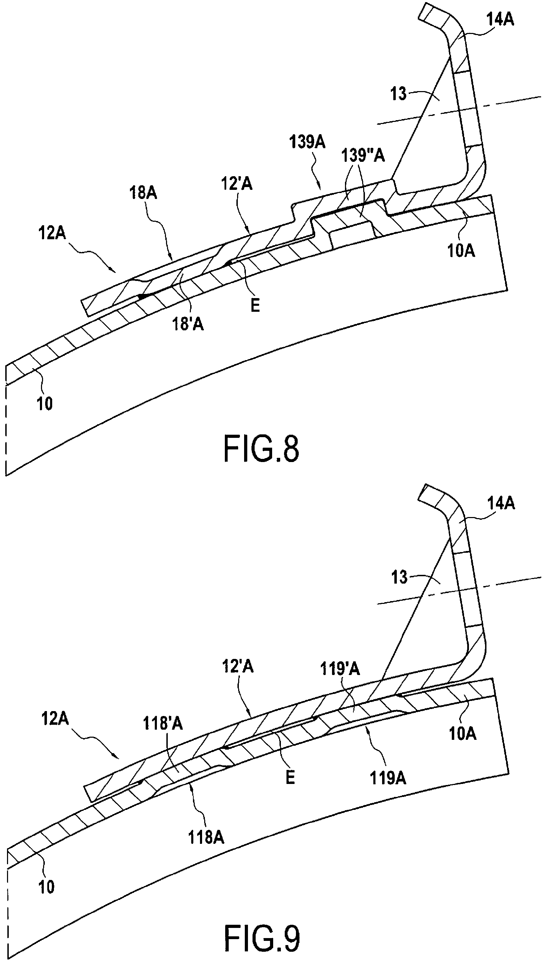

La figure 8 montre une variante du mode de réalisation de la figure 5, dans laquelle la première zone de fixation 18A est encore inchangée, tandis que la deuxième surface de fixation 139A est réalisée par un clinchage 139"A vers l'extérieur: les déformations conjointes de la ceinture 10 et de la semelle 12'A de la portion de la bande 12A sont opérées vers l'extérieur. Ainsi, la deuxième zone de fixation ne fait pas saillie sur la face interne de la ceinture 10.

On décrit maintenant la figure 9, qui montre une variante du premier mode de réalisation dans laquelle la première zone de fixation 118A comprend cette fois un bossage 118A qui est un bossage de la ceinture 10 en saillie vers l'extérieur. Ce bossage coopère avec la face interne de la semelle 12'A de la portion de bande 12A, qui peut être plate, et ménage ainsi un espace de dégagement E entre les faces en regard de cette semelle 12'A et de la ceinture 10. En l'espèce, on a représenté la deuxième zone de fixation 119A comme sur la figure 6. Bien entendu, cette deuxième zone de fixation pourrait avoir l'une quelconque des configurations décrites en référence aux figures précédentes.

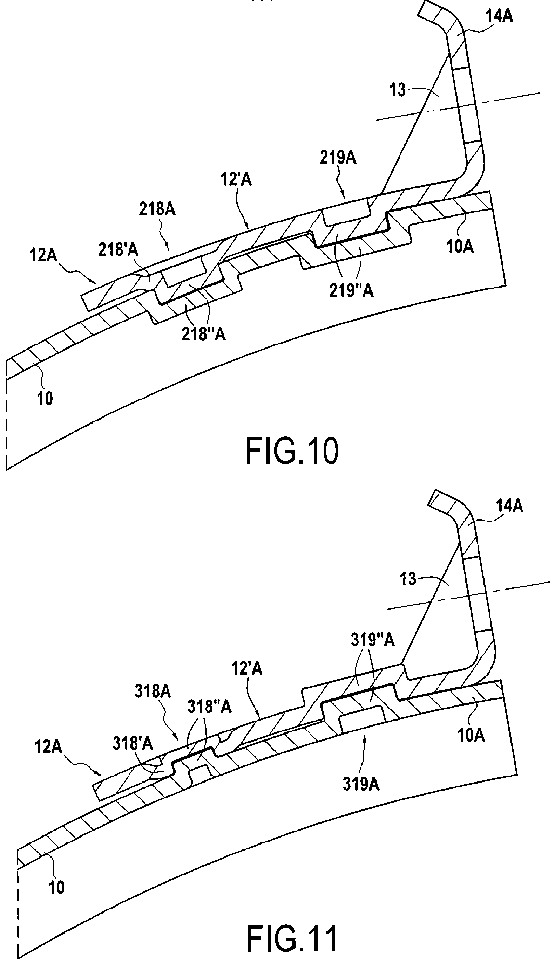

La figure 10 montre une autre variante du premier mode de réalisation dans laquelle la première zone de fixation 218A est formée par clinchage 218"A, en l'espèce un clinchage en saillie vers l'intérieur. En effet, le fond du bosssage 218'A qui, en l'espèce, est formé dans la portion de bande 12A, est déformé vers l'intérieur avec une partie adjacente de la ceinture 10. Ainsi, dans ce cas, la première zone de fixation ne nécessite pas de soudure. On pourrait bien entendu former le bossage dans la ceinture, comme sur la figure 9. Par ailleurs, comme le montre la figure 11, on peut former le bossage dans un sens et le clinchage dans l'autre sens. Ainsi, sur la figure 11, la première zone de fixation 318A comprend un bossage 318'A de la portion de bande 12A, ce bossage étant en saillie vers l'intérieur, et un clinchage 318"A formé par une déformation conjointe vers l'extérieur de la matière du fond du bossage et de la matière de la partie adjacente de la ceinture.

Sur les figures 10 et 11, la première zone de fixation ne nécessite pas de soudure. En l'espèce, il en va de même pour la deuxième zone de fixation. A titre d'exemple, la figure 10 montre la deuxième zone de fixation 219A formée par un clinchage 219"A vers l'intérieur, et la figure 11 montre la deuxième zone de fixation 319A formée par un clinchage 319"A vers l'extérieur.

On relève en outre que, dans les exemples des figures 10 et 11, la deuxième zone de fixation est formée sans bossage. En effet, dès lors que l'espace entre la face interne de la portion de bande 12A et la face externe de la ceinture 10 est assuré dans la région de la première zone de fixation par le bossage de cette zone, la deuxième zone de fixation peut ne pas comporter de bossage si cet espace est jugé suffisant pour l'adaptation de la portion de bande à la courbure de la ceinture. Ceci est bien entendu valable lorsque les zones de fixation sont formées par soudure.

La première zone de fixation a avantageusement des dimensions réduites, elle peut ainsi représenter une surface de l'ordre de 15 mm² à 80 mm², de préférence de l'ordre de 25 mm² à 60 mm². Cette surface s'entend de la surface de contact contribuant à la fixation de la portion de bande 12A à la ceinture dans la première zone de fixation. Cette surface peut correspondre à celle d'un disque ayant un diamètre compris entre 25 et 60 % de la largeur L de la ceinture. S'agissant d'une ceinture profilée, cette largeur L s'entend comme la longueur, mesurée parallèlement à l'axe A de la ceinture, entre les deux bords de cette dernière. Cependant, la ceinture peut évidemment adopter d'autres formes, et par exemple celle d'une bande plate, auquel cas cette largeur bord à bord serait celle de cette bande plate.

Comme on l'a vu, et en particulier lorsqu'elle est réalisée par un bossage en forme de plot calé dans une ouverture de la ceinture ou par clinchage, la deuxième zone de fixation peut d'abord être mise en œuvre pour servir à positionner la portion de bande par rapport à la ceinture et réaliser ensuite la première zone de fixation, par exemple par soudure.

La hauteur h du bossage 18'A peut globalement être du même ordre que l'épaisseur e de la portion de bande 12A (voir figure 4). Globalement, cette hauteur peut être comprise entre environ 10 % et 100 % de cette épaisseur e. Lorsque la fixation dans la première zone de fixation est réalisée par soudure, la soudure tend à aplatir le bossage, de sorte que la hauteur restante du bossage qui correspond à la hauteur de l'espace E dans une zone immédiatement adjacente à la première zone de fixation peut être réduite et par exemple être de l'ordre de 5 à 20 % de l'épaisseur e.

Par exemple, les portions de bande 12A et 12B et la ceinture sont réalisées dans des bandes de métal ayant la même épaisseur ou sensiblement la même épaisseur.

Dans les modes de réalisation représentés, exactement deux zones de fixation sont prévues pour chacune des premières et deuxièmes portions de bande. D'une part, ce nombre réduit de zones de fixations permet l'adaptation de chaque portion de bande à la courbure de la ceinture sans nécessairement que la courbure de chaque portion de bande soit initialement la même que celle de la ceinture. D'autre part, le fait de disposer de deux zones de fixation plutôt que d'une seule pour chaque portion de bande permet d'aligner les portions de bande avec la direction circonférentielle de la ceinture et d'éviter les risques de décalage angulaire par la déviation selon la direction de l'axe A.

## Revendications

1. Dispositif de serrage comprenant une ceinture (10) ayant une première et une deuxième extrémité (10A, 10B), et une première et une deuxième oreille de serrage (14A, 14B) portées par la ceinture qui sont respectivement formées dans une première et une deuxième portion de bande (12A, 12B) respectivement fixées à la face externe de la ceinture (10) au voisinage de sa première et de sa deuxième extrémité (10A, 10B), au moins la première portion de bande (12A) étant fixée à la ceinture par au moins une première zone de fixation (18A ; 118A; 218A ; 318A) formée sur un bossage (18'A ; 218'A) de la première portion de bande (12A) en saillie vers l'intérieur et / ou un bossage (118'A ; 318'A) de la ceinture (10) en saillie vers l'extérieur, et par une deuxième zone de fixation (19A ; 29A ; 39A ; 119A ; 129A ; 139A ; 219A ; 319A), **caractérisé en ce que**, de part et d'autre du bossage (18'A; 118'A; 218'A; 318'A) sur lequel est formée la première zone de fixation (18A ; 118A ; 218A ; 318A), un espace de dégagement (E) est ménagé entre la face interne de la première portion de bande (12A) et la face externe de la ceinture (10).

2. Dispositif selon la revendication 1, dans lequel la première zone de fixation (18A ; 118A) est formée par soudure.

3. Dispositif selon la revendication 1 ou 2, dans lequel la première et la deuxième zone de fixation (18A, 118A, 218A, 318A ; 19A, 29A, 39A, 119A, 129A, 139A, 219A, 319A) sont alignées dans la direction circonférentielle de la ceinture.

4. Dispositif selon l'une des revendications 1 à 3, dans lequel la dimension de la deuxième zone de fixation (19A; 29A ; 39A ; 119A; 129A ; 139A ; 219A ; 319A) mesurée selon la surface de la ceinture (10), est analogue à celle de la première zone de fixation (18A ; 118A ; 218A ; 318A).

5. Dispositif selon l'une quelconque des revendications 1 à 4, dans lequel la dimension de la première zone de fixation (18A ; 118A ; 218A ; 318A) représente entre 15 mm² et 80 mm², de préférence entre 25 mm² et 60 mm².

6. Dispositif selon l'une quelconque des revendications 1 à 5, dans lequel la première zone de fixation (18A ; 118A ; 218A ; 318A) représente une surface sensiblement en forme de disque, ayant un diamètre compris entre 25 % et 60 % de la largeur (L) de la ceinture.

7. Dispositif selon l'une quelconque des revendications 1 à 6, dans lequel la deuxième zone de fixation (19A ; 29A ; 119 A ; 129A) est formée sur un bossage (19'A ; 29'A) de la première portion de bande (12A) en saillie vers l'intérieur et / ou un bossage (119'A ; 129'A) de la ceinture (10) en saillie vers l'extérieur.

8. Dispositif selon la revendication 7, dans lequel le bossage (29'A ; 129'A) de la deuxième zone de fixation (29A; 129A) est formé dans l'un des éléments comprenant la première portion de bande (12A) et la ceinture (10) et délimite un rebord de calage (29"A ; 129"A), et dans lequel l'autre des éléments comprenant la première portion de bande et la ceinture présente une ouverture (10'A ; 110'A) dans laquelle le bossage de la deuxième zone de fixation est reçu et calé.

9. Dispositif selon l'une quelconque des revendications 1 à 6, dans lequel la deuxième zone de fixation (39A ; 139A ; 219A ; 319A) est formée par clinchage.

10. Dispositif selon l'une quelconque des revendications 1 à 6, dans lequel la deuxième zone de fixation (19A ; 119A) est formée par soudure.

11. Dispositif selon l'une quelconque des revendications 1 à 9, dans lequel, parmi les première et deuxième zones de fixation (18A, 118A ; 19A, 29A, 39A, 119A, 129 A, 139A), seule la première zone de fixation est formée par soudure, cette première zone de fixation se trouvant optionnellement en arrière de la deuxième zone de fixation.

12. Dispositif selon l'une quelconque des revendications 1 à 10, dans lequel les première et deuxième portions de bande (12A, 12B) sont fixées à la ceinture (10) de la même manière.

13. Dispositif selon l'une quelconque des revendications 1 à 12, dans lequel exactement deux zones de fixation (18A, 118A, 218A, 318A ; 19A, 29A, 39A, 119A, 129A, 139A, 219A, 319A) sont prévues pour chacune des première et deuxième portions de bande (12A, 12B).

## Patentansprüche

1. Spannvorrichtung, umfassend einen Gurt (10), der ein erstes und ein zweites Ende (10A, 10B) aufweist, und ein erstes und ein zweites Spannohr (14A, 14B), die von dem Gurt getragen werden und jeweils in einem ersten und einem zweiten Bandabschnitt (12A, 12B) ausgebildet sind, die jeweils an der Außenfläche des Gurts (10) in der Nähe seines ersten und seines zweiten Endes (10A, 10B) befestigt sind, wobei zumindest der erste Bandabschnitt (12A) an dem Gurt durch mindestens eine erste Befestigungszone (18A; 118A; 218A; 318A) befestigt ist, die auf einer Erhebung (18'A; 218'A) des ersten Bandabschnitts (12A) vorspringend zur Innenseite und/oder einer Erhebung (118'A; 318'A) des Gurts (10) vorspringend zur Außenseite ausgebildet ist, und durch eine zweite Befestigungszone (19A; 29A; 39A; 119A; 129A; 139A; 219A; 319A), **dadurch gekennzeichnet, dass** auf beiden Seiten der Erhebung (18'A; 118'A; 218'A; 318'A), auf der die erste Befestigungszone (18A; 118A; 218A; 318A) ausgebildet ist, ein Freiraum (E) zwischen der Innenfläche des ersten Bandabschnitts (12A) und der Außenfläche des Gurts (10) vorgesehen ist.

2. Vorrichtung nach Anspruch 1, wobei die erste Befestigungszone (18A; 118A) durch Schweißen gebildet wird.

3. Vorrichtung nach Anspruch 1 oder 2, wobei die erste und die zweite Befestigungszone (18A, 118A, 218A, 318A; 19A, 29A, 39A, 119A, 129A, 139A, 219A, 319A) in der Umfangsrichtung des Gurts ausgerichtet sind.

4. Vorrichtung nach einem der Ansprüche 1 bis 3, wobei die Abmessung der zweiten Befestigungszone (19A; 29A; 39A; 119A; 129A; 139A; 219A; 319A), gemessen entlang der Oberfläche des Gurts (10), mit derjenigen der ersten Befestigungszone (18A; 118A; 218A; 318A) vergleichbar ist.

5. Vorrichtung nach einem der Ansprüche 1 bis 4, wobei die Abmessung der ersten Befestigungszone (18A; 118A; 218A; 318A) zwischen 15 mm² und 80 mm², vorzugsweise zwischen 25 mm² und 60 mm² liegt.

6. Vorrichtung nach einem der Ansprüche 1 bis 5, wobei die erste Befestigungszone (18A; 118A; 218A; 318A) eine Oberfläche aufweist, die im Wesentlichen scheibenförmig ist und einen Durchmesser besitzt, der zwischen 25 % und 60 % der Breite (L) des Gurts liegt.

7. Vorrichtung nach einem der Ansprüche 1 bis 6, wobei die zweite Befestigungszone (19A; 29A; 119A; 129A) auf einer Erhebung (19'A; 29'A) des ersten Bandabschnitts (12A) vorspringend zur Innenseite und/oder einer Erhebung (119'A; 129'A) des Gurts (10) vorspringend zur Außenseite ausgebildet ist.

8. Vorrichtung nach Anspruch 7, wobei die Erhebung (29'A; 129'A) der zweiten Befestigungszone (29A; 129A) in einem der Elemente, das den ersten Bandabschnitt (12A) und den Gurt (10) umfasst, ausgebildet ist und eine Keilkante (29"A; 129"A) begrenzt, und wobei das andere der Elemente, das den ersten Bandabschnitt und den Gurt umfasst, eine Öffnung (10'A; 110'A) aufweist, in der die Erhebung der zweiten Befestigungszone aufgenommen und verkeilt ist.

9. Vorrichtung nach einem der Ansprüche 1 bis 6, wobei die zweite Befestigungszone (39A; 139A; 219A; 319A) durch Clinchen gebildet wird.

10. Vorrichtung nach einem der Ansprüche 1 bis 6, wobei die zweite Befestigungszone (19A; 119A) durch Schweißen gebildet wird.

11. Vorrichtung nach einem der Ansprüche 1 bis 9, wobei von der ersten und zweiten Befestigungszone (18A, 118A; 19A, 29A, 39A, 119A, 129A, 139A) nur die erste Befestigungszone durch Schweißen gebildet wird, wobei sich diese erste Befestigungszone gegebenenfalls hinter der zweiten Befestigungszone befindet.

12. Vorrichtung nach einem der Ansprüche 1 bis 10, wobei der erste und zweite Bandabschnitt (12A, 12B) auf die gleiche Weise an dem Gurt (10) befestigt sind.

13. Vorrichtung nach einem der Ansprüche 1 bis 12, wobei genau zwei Befestigungszonen (18A, 118A, 218A, 318A; 19A, 29A, 39A, 119A, 129A, 139A, 219A, 319A) für jeden von dem ersten und zweiten Bandabschnitt (12A, 12B) vorgesehen sind.

## Claims

1. A tightening device comprising a belt (10) having a first and a second end (10A, 10B), and a first and a second tightening lug (14A, 14B) carried by the belt which are formed respectively in a first and a second band portion (12A, 12B) respectively fastened to the outer face of the belt (10) in the vicinity of its first and its second end (10A, 10B), at least the first band portion (12A) being fastened to the belt through at least a first fastening area (18A; 118A; 218A; 318A) formed on at least one of a boss (18'A; 218'A) of the first band portion (12A) protruding inwardly and a boss (118'A; 318'A) of the belt (10) protruding outwardly, and through a second fastening area (19A; 29A; 39A; 119A; 129A; 139A; 219A; 319A); **characterized in that**, around the boss (18'A; 118'A; 218'A; 318'A) on which the first fastening area (18A; 118A; 218A; 318A) is formed, a clearance gap (E) is arranged between the inner face of the first band portion (12A) and the outer face of the belt (10).

2. The device according to claim 1, wherein the first fastening area (18A; 118A) is formed by welding.

3. The device according to claim 1 or 2, wherein the first and second fastening areas (18A, 118A, 218A, 318A; 19A, 29A, 39A, 119A, 129A, 139A, 219A, 319A) are aligned in the circumferential direction of the belt.

4. The device according to any of claims 1 to 3, wherein the dimension of the second fastening area (19A; 29A; 39A; 119A; 129A; 139A; 219A; 319A) measured according to the surface of the belt (10), is similar to that of the first fastening area (18A; 118A; 218A; 318A).

5. The device according to any one of claims 1 to 4, wherein the dimension of the first fastening area (18A; 118A; 218A; 318A) represents between 15 mm² and 80 mm², preferably between 25 mm² and 60 mm².

6. The device according to any one of claims 1 to 5, wherein the first fastening area (18A; 118A; 218A; 318A) represents a substantially disk-shaped surface having a diameter of between 25% and 60% of the width (L) of the belt.

7. The device according to any one of claims 1 to 6, wherein the second fastening area (19A; 29A; 119A; 129A) is formed on at least one of a boss (19'A; 29'A) of the first band portion (12A) protruding inwardly and a boss (119'A; 129'A) of the belt (10) protruding outwardly.

8. The device according to claim 7, wherein the boss (29'A; 129'A) of the second fastening area (29A; 129A) is formed in one of the elements comprising the first band portion (12A) and the belt (10) and delimits a wedging rim (29"A; 129"A), and wherein the other of the elements comprising the first band portion and the belt has an opening (10'A; 110'A) in which the boss of the second fastening area is accommodated and wedged.

9. The device according to any one of claims 1 to 6, wherein the second fastening area (39A; 139A; 219A; 319A) is formed by clinching.

10. The device according to any one of claims 1 to 6, wherein the second fastening area (19A; 119A) is formed by welding.

11. The device according to any one of claims 1 to 9, wherein, of the first and second fastening areas (18A, 118A, 19A, 29A, 39A, 119A, 129A 139A), only the first fastening area is formed by welding, this first fastening area being optionally behind the second fastening area.

12. The device according to any one of claims 1 to 10, wherein the first and second band portions (12A, 12B) are fastened to the belt (10) in the same manner.

13. The device according to any one of claims 1 to 12, wherein exactly two fastening areas (18A, 118A, 218A, 318A, 19A, 29A, 39A, 119A, 129A, 139A, 219A, 319A) are provided for each of the first and second band portions (12A, 12B).
